# EUROPEAN PATENT SPECIFICATION

(11) **EP 1 811 780 B1**
(45) Date of publication and mention of the grant of the patent: **07.11.2012**
(21) Application number: 06290174.9
(22) Date of filing: 24.01.2006
(51) Int. Cl.: H04N 7/173, H04N 5/00

(54) **Access node with caching function for video channels**
Routingknote mit Pufferfunktion für Videokanäle
Point d'accès avec des fonctions de cache / tampon / antémémoire pour des chaînes vidéo

(43) Date of publication of application: 25.07.2007
(73) Proprietor: Alcatel Lucent, 75007 Paris (FR)
(72) Inventor: De Vleeschauwer, Danny, 9940 Evergem (BE); Degrande, Natalie Maria Cornelia, 9290 Overmere (BE); De La Vallee, Paloma, 1982 Weerde (BE); Vandaele, Piet Michel Albert, 9040 Sint-Amandsberg (BE)
(74) Representative: Narmon, Gisèle Marie Thérèse

(56) References cited:
- EP-A- 1 107 601
- WO-A-01/26271
- DE-A1-102004 026 170
- US-A- 5 933 192
- US-A1- 2004 001 500
- US-B1- 6 728 965
- PETER CHRISTY: "THE NETWORK PROVIDERS BUSINESS CASE FOR INTERNET CONTENT DELIVERY" INTERNET RESEARCH GROUP, [Online] 31 December 1999 (1999-12-31), pages 1-26, XP002384279 Internet Retrieved from the Internet: URL:http://www1.cs.columbia.edu/~danr/cour ses/6762/Summer03/week1/akamai-provider.pd f> [retrieved on 2006-06-07]

## Description

### Field of the Invention

The present invention generally relates to caching video channels in access nodes like a Digital Subscriber Line Multiplexer (DSLAM), a Digital Loop Carrier (DLC), a node B, a Radio Network Controller (RNC), a Cable Modem Terminating System (CMTS), an Optical Fibre Aggregator, etc. "Video channels" in the context of this patent application covers any connection or pipe used for packet based delivery of video content or TV content, like for instance nation-wide IPTV channels offering live content, community TV channels restricted to members of a community, and (less likely) video-on-demand (VoD) channels or near video-on-demand (NVoD) channels, etc. Caching a video channel k in the context of this patent application implies at any moment in time temporarily memorizing the M most recently sent frames of that channel k in for instance a circular buffer or other memory structure available in the access node. Typically, M shall be chosen such that the circular buffer or cache memory will contain at least one Group of Pictures (GoP), such that the last synchronization frame, i.e. the last I-frame, always resides in the cache. M could be equal or different for various TV channels. In case of VoD or NVoD channels, the cache memory might be bigger to not only cache a GoP but a complete video sequence in order to increase the chance that two or more viewers will make use of the cached content. This is so because the viewers are not watching a TV or video program simultaneously in case of VoD or NVoD and consequently do not consume the same GoP simultaneously.

### Background of the Invention

US Patent 6,728,965 discloses a broadband digital terminal (which is an instance of an access node in a broadband access system) with a cache buffer for video data. The cache buffer works in conjunction with a processor that keeps pointers to the synchronization frames or I-frames in the cached video data, and that intercepts channel change requests from subscribers. The requested new channel can be accessed quickly and directed to the subscriber without delay. The video caching system known from US 6,728,965 in other words increases the zapping or channel changing speed. On reception of a zap request from the subscriber's set-top box (STB), the access node (called BDT or Broadband Digital Terminal in US 6,728,965) sends the last buffered synchronization frame (or I-frame) and all consecutive frames to the zapping subscriber, who experiences the channel change instantly without having to wait for the next synchronization frame to come along in the regular video stream. The zapping benefit comes at the expense of a temporary higher bit rate immediately after the zap. Thanks to the caching, this burst in bit rate is not transported through the entire network, but needs to be sustained only in the last mile, i.e. on the subscriber line between the access node and the customer premises. The zapping benefit is realised only when the newly requested channel is effectively cached in the access node. A video cache function integrated in an access node to enable fast zapping, like the one known from US 6,728,965, consequently must either cache all video channels requiring a large, expensive, over-dimensioned cache memory in the access node, or - in a more advanced implementation that is not described in US 6,728,965 - rely on a strategy where the zapping rate is monitored for each channel and only the channels with the highest zapping rate are cached in the access node.

In a different prior art solution, content is cached in order to enable the subscriber to request retransmission of packets that were lost or corrupted through transmission over the subscriber loop. The Akamai content server, described in the publication "The Network Providers Business Case for Internet Content Delivery" from the Internet Research Group for instance can be placed in or near DSLAMs, cable head-ends, modem racks, etc. to improve the quality and customer satisfaction through for instance fast retransmissions from a node close to the subscriber. Since retransmission from the source, e.g. a web server (in case of Internet content) or a video server or broadcast TV server (in case of video content) would take too much time, channel quality improvement is only possible for the cached video channels or content. Again, the cache function should therefore be dimensioned to cache all video channels, or alternatively could be enabled to monitor the channel popularity and cache only the most popular channels in order to improve the quality on the most popular channels only. The latter strategy is followed for instance by the above cited Akamai server which stores highly popular, highly accessed content in a cache memory close to the subscriber, as explained in the section "Improved Customer Satisfaction Through Better QoS" on page 12 of the above referenced article. This article is accessible via the Internet URL:
http://www1.cs.columbia.edu/~danr/6762/week1/akamai-provider.pdf

In real deployments, caching all video channels in the access node is usually not possible due to the limited amount of caching memory (e.g. caching Random Access Memory or RAM). For instance, to cache one GoP (typically 2 seconds) of a standard definition TV flow encoded at typically 2 Mbps, 0.5 Mbyte of caching memory per channel is required. For high definition TV channels, this would increase to 2.5 Mbyte caching memory per cached channel. Hence, a selection must be made of the video channels that will be cached in the access node. The prior art solutions suggesting to either cache video channels for increasing the zapping speed, or alternatively to cache video channels for improving the channel quality through fast retransmissions, lead to different sets of channels to be cached, but do not find a compromise realizing both objectives, i.e. zapping speed improvement and channel quality improvement.

US patent 2004/0001500 A1 (Castillo Michael J) discloses, to help avoid dealy, various embodiments concerning predectively buffering channel results in an immediate presentation of buffered data. In one embodiment a predictor that can monitor channel selections, identify channels that appear popular, and predict the popular channels will likely be selected next, is described. For example, in one embodiment, over time, a predictor can monitor watched channels in order to later predict channels likely to be directly selected, e.g., entered on a keypad, selected from a menu, etc., by a user.

Another drawback of the prior art solutions is that the operator has little or no flexibility in selecting the video channels to be cached.

It is an object of the present invention to disclose an access node with video cache function that does not have the above mentioned drawbacks of the prior art solutions. In particular, it is an object to disclose an access node with video cache function enabling both fast channel changing and channel quality improvement through retransmission, and which provides greater flexibility to the operator in prioritizing the content to be cached.

### Summary of the Invention

According to the current invention, the above defined object is realized through an access node able to multicast a plurality of video channels to subscribers, and comprising channel selection means for selecting N video channels, and channel caching means for temporarily storing the most recent frames of these N video channels, N being an integer number equal to or larger than 1. As defined by claim 1, the channel selection means select the N video channels on the basis of a weighted sum of the zapping rate rₖ and the channel popularity πₖ, determined for each video channel. Its cache function may include:
a. means to frequently measure the channel popularity πₖ for each video channel; and
b. means to frequently measure for each video channel the average amount of time the channel is watched, Tₖ, i.e. the average time elapsing between the instant a user zaps to channel k and the instant the user zaps from that channel k to a different channel; and
c. means to memorize for each video channel k an operator configurable weight factor for the zapping benefit, Bₖ; and
d. means to memorize for each video channel k an operator configurable weight factor for the channel quality gain, Gₖ. Furthermore, a feature of the access node according to the present invention is that the weight factor for the zapping benefit, Bₖ, may be configured proportional to the capacity savings in the network, e.g. on the feeder link towards the access node realized through caching the corresponding video channel. Hence, the zapping benefit for a high definition TV channel may for instance be chosen a factor 4 or 5 larger than the zapping benefit assigned by the operator to standard definition TV channels. And finally a feature of the access node according to the present invention is that the weight factor for the channel quality gain, Gₖ, may be configured proportional to the importance of channel quality for that video channel.

As an example, the operator may for instance choose a large quality gain for nation-wide TV channels that he is legally required to offer, hence prioritizing such nation-wide TV channels over regional TV channels for caching in the access node. Another example could be a higher quality gain Gₖ for TV channels whose owner or TV operator is prepared to pay for the better delivery quality.

Thus, thanks to the weighted sum, the cache function according to the current invention will find a compromise between caching only those channels that have the largest measured zapping rate (the one extreme), and caching only those channels that have the largest popularity (the other extreme). As a consequence, an optimal set of video channels will be cached, taking into account the two conflicting requirements of the need to cache channels that are frequently zapped to and the need to cache channels that are popular, without impacting the dimensioning of the cache memory. The weight factor may be either fixed or programmable. In the latter case where the weight factors are made configurable, the operator has through an appropriate choice of the factors an additional level of flexibility between the two extremes known from the prior art, i.e. caching for faster zapping and caching for improved quality.

The present invention further relates to a method for caching video channels in an access node, as defined by claim 11.

Indeed, from the measured channel popularity πₖ and the measured time Tₖ in between zapping, the zapping rate rₖ can be derived for each channel, hence enabling to calculate a weighted sum of the zapping rate and the channel popularity as required for the video channel selection process according to the current invention.

Another optional feature of the access node according to the present invention is that the channel selection means further is able to determine the zapping rate rₖ by dividing the measured channel popularity, πₖ, with the measured average amount of time the video channel is watched, Tₖ. This feature is covered by claim 2.

Indeed, πₖ/Tₖ is a measure for the zapping rate to channel k (which is in steady state also equal to the zapping rate from that channel to any other channel). If all channels are watched for on average the same time, very popular channels are most often zapped to. On the other hand, a popular channel that is on average watched for a long time has a low associated zapping rate.

A further optional feature of the access node according to the current invention is that it is able to calculate for each video channel a channel advantage Aₖ according to the formula (Bₖ/Tₖ + Gₖ) x πₖ, and that it has channel ordering means for ordering the video channels according to decreasing channel advantage Aₖ, as defined by claim 3.

Indeed, as explained above, πₖ/Tₖ is a measure for the zapping rate rₖ. As a consequence, the channel advantage Aₖ as defined in claim 3 corresponds to Bₖ x rₖ + Gₖ x πₖ. The channel advantage in other words represents a weighted sum of the zapping rate and the channel popularity, and can be used to prioritize the video channels for caching in a way consistent with the current invention.

Still an implementation option of the access node according to the current invention, defined by claim 4, is that it may be adapted to cache the N first channels ordered according to decreasing channel advantage.

Thus, the cache memory will store the first N channels in a list that is obtained through ranking the TV channels according to decreasing Aₖ value. The ordering may be updated at regular instants, e.g. every hour, as a result of which the cached TV channels will vary hourly as well.

As indicated by claims 5 to 10, the access node according to the current invention can for instance be a Digital Subscriber Line Access Multiplexer (DSLAM), a Digital Loop Carrier (DLC), a Cable Modem Termination System (CMTS), an Optical Fibre Aggregator, a node B, a Radio Network Controller (RNC), etc.

### Brief Description of the Drawings

Fig. 1 illustrates an embodiment of the access node according to the current invention; and
Fig. 2 is a functional block scheme of the video channel selection unit and cache memory as implemented in the embodiment of the current invention illustrated by Fig. 1.

### Detailed Description of Embodiment(s)

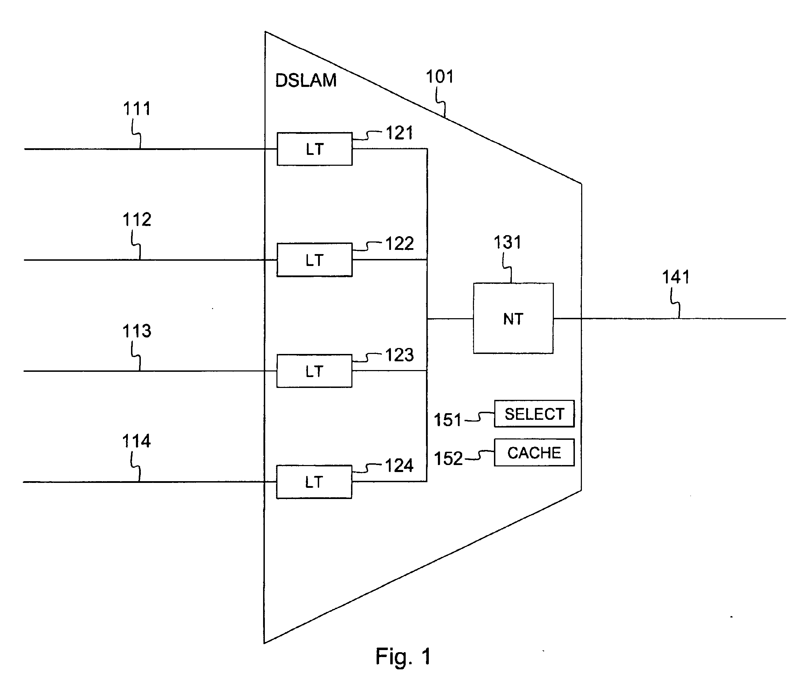

Fig. 1 shows a DSLAM 101 with a number of line terminations for connectivity to subscribers, 121, 122, 123 and 124, and a network termination 131 for connectivity to an aggregation network. The DSLAM 101 multiplexes upstream data traffic from multiple DSL subscribers onto the uplink 141 towards the aggregation network, and in the reverse direction demultiplexes downstream traffic destined to the different DSL subscribers that are connected to the DSLAM 101 via respective point-to-point DSL lines, referenced by 111, 112, 113 and 114 in Fig. 1. The network termination 131 is interconnected with the line terminations via a switching fabric with either point-to-point or point-to-multipoint (i.e. bus) architecture. The DSLAM 101 is supposed to have IGMP proxies on the LTs and/or NT to intercept channel requests from the subscribers, and further contains a video channel selection unit 151 and a video channel cache memory 152 for caching certain video or IPTV channels that pass through the DSLAM 101. This selection unit 151 and the video channel cache memory 152 may be integrated with the NT 131 or could form part of a separate IPTV server that is either integrated in or connected to the DSLAM 101.

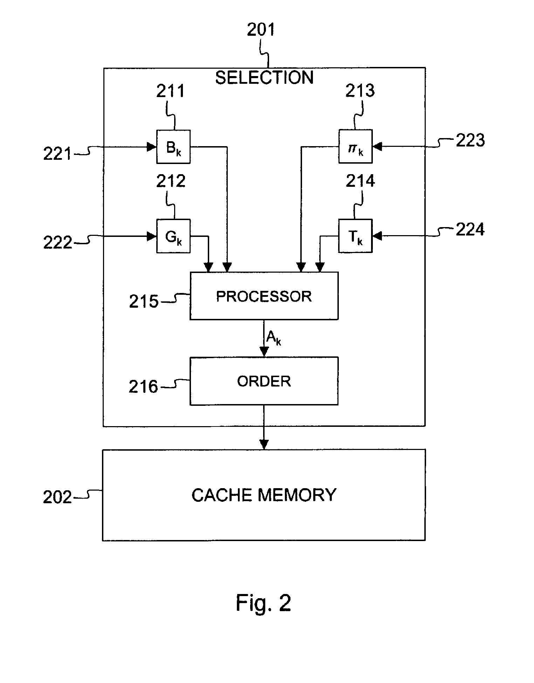

Fig. 2 contains more detail on the functional contents of the video channel selection unit of Fig. 1 (referenced by 201 in Fig. 2), and the cache memory of Fig. 1 (referenced by 202 in Fig. 2). The video channel selection unit 201 contains a register 211 for the zapping benefits Bₖ, registers 212 for the channel quality gains Gₖ, a measurement function 213 for the channel popularity πₖ, and a measurement unit 224 for the average time Tₖ that video channels are watched, i.e. the average time elapsing between the instant a user zaps to channel k and the instant the user zaps away from the channel k.

The registers 211 and 212 are accessible for the operator through the interfaces 221 and 222 which for instance allow the operator to set the zapping benefit Bₖ for each video channel k and to set the channel quality gain Gₖ for each video channel k through for instance a PC, an operating system and/or graphical user interface. As will be explained below, the zapping benefits Bₖ and the channel quality gains Gₖ will serve as weights in the decision which video channels to cache in the cache memory 202. The operator thereto makes appropriate choices for the parameters Bₖ and Gₖ. If the zapping benefits Bₖ are chosen large with respect to the channel quality gains Gₖ, the operator for instance chooses a strategy wherein video channels are cached rather to enable fast zapping than to enable quality improvement through retransmission on popular video channels. If on the other hand the channel quality gains Gₖ are chosen large with respect to the zapping benefits Bₖ, the strategy chosen by the operator boils down to caching video channels with the aim of improving channel quality on popular video channels rather than caching to enable fast channel changing. The zapping benefit Bₖ for a video channel k can for instance be chosen proportional to the capacity saving that is realised on the uplink towards the aggregation network when the video channel is cached in the DSLAM as opposed to a situation where channel k is not cached in the DSLAM and every new request for this channel implies retrieving the channel from the last multicasting node in the aggregation network or even deeper in the network. If video channel k is a high definition TV channel, savings in the aggregation network will for instance be a factor 4 to 5 larger than for video channels that convey standard definition TV. This could be reflected in the value for the zapping benefit Bₖ set by the operator when this zapping benefit is made proportional to the capacity savings. The channel quality gain Gₖ for a video channel k on the other hand may for instance be chosen proportional to the importance that the operator draws to offering video channel k at high quality to the subscribers. In particular, the operator may for instance choose a large channel quality gain Gₖ for nation-wide TV channels that he is legally required to offer at a certain quality, and assign a small quality gain Gₖ for regional TV channels. The operator may also assign a higher quality gain Gₖ to TV channels whose owner or operator pays for the better delivery quality, and consequently commercially exploit the additional flexibility he gets through the current invention.

The measurement function 213 for the channel popularity πₖ monitors the channel popularity, i.e. the viewer distribution, for each channel k. The measurement must be performed carefully, i.e. for instance executed every second and averaged over a time interval that is long enough to eliminate statistical fluctuation on the measurement result without destroying periodic trends, like daily or weekly trends in the viewer density for the different channels. A rule of thumb is to choose the measurement intervals such that for each channel of interest at least 10 instances of the measured channel popularity fall within the measurement interval. It is advantageous to have the measurement function for the channel popularity in the DSLAM because the channel popularity might be different for different DSLAMs since different DSLAMs serve different subscribers. Nevertheless, one could also think of using the viewer density figures already collected elsewhere in the network, for instance near the encoders. Similarly, the measurement function 224 for the average time Tₖ that video channels are watched, monitors for each channel the average time elapsing between the instant a user zaps to channel k and the instant that user zaps away from channel k to any other channel. Tracking the average viewing time Tₖ, may for instance be done in conjunction with the IGMP (Internet Group Management Protocol) host(s) in the DSLAM that terminate(s) the zap requests or channel change requests coming from subscribers. Again, averaging should eliminate statistical fluctuations while save-guarding the slow evolution of the zapping rate (taking into account possible daily and weekly patterns). For the measurements, the units 213 and 214 may be coupled via respective interfaces 223 and 224 to the different line terminations in the DSLAM, such that a single measurement function can perform the monitoring for all channels viewed by all subscribers.

The overall channel advantage Aₖ of caching channel k versus not caching channel k according to the present invention corresponds to the weighted sum of the zapping rate rₖ and the channel popularity πₖ, i.e. Aₖ = Bₖ x rₖ + Gₖ x πₖ. The zapping rate rₖ for channel k corresponds to the inverse of the average time period Tₖ measured in between two zaps, multiplied by the relative number of viewers πₖ for channel k, i.e. rₖ = πₖ / Tₖ. The advantage factor for channel k therefore reduces to Aₖ = (Bₖ / Tₖ + Gₖ) x πₖ. With the contents of the registers 211 and 212, and the measurement results received from the measurement functions 213 and 214, the processor 215 can calculate the channel advantage Aₖ for each channel k.

Ordering unit 216 then orders the video channels in decreasing order of the value Aₖ, and decides to cache the first N channels in the cache memory 202. The ordering of the channels and the caching of the first N channels in the list may be updated at regular time instants, for example every hour.

Although the present invention has been illustrated by reference to a specific embodiment illustrated by Fig. 1 and Fig. 2, it will be apparent to those skilled in the art that various changes and modifications may be made within the spirit and scope of the invention, without departing from the basic principle of this invention which is to select the video/TV channels to be cached in the access node on the basis of a weighted sum of the channel popularities and the channel zapping rates in order to achieve both improved zapping experience and improved channel quality for the subscribers. It is therefore contemplated to cover any and all modifications, variations or equivalents that fall within the spirit and scope of this basic underlying principle disclosed and claimed in this patent application. For example, instead of measuring the channel popularity πₖ and the average view time Tₖ, other measurements may be made that lead to the calculation of the channel popularity and zapping rate. It is even possible that some information is already collected in the access node, the management platform or other network elements like the encoders, for other purposes (e.g. the channel popularity may already be monitored for viewer statistics collection), as a result of which no or fewer new measurements may be required in order to determine the channel popularity and zapping rate. Further, it is noted that the registers for the weights Bₖ and Gₖ may be integrated with other memories in the access node or may be replaced with other types of memory. These registers may be accessible for operators as explained above, or in variant embodiments of the current invention that do not provide this additional flexibility to the operator and may be fixed and inaccessible memories, like for instance pre-programmed or hard-coded registers. The processor or calculation function for the channel advantages Aₖ may be implemented in hardware or software. Although the embodiment of the current invention described above forms part of a DSLAM, it will be obvious to any person skilled in the art of designing nodes for telecommunication networks that the invention could be integrated in any other type of access node including a CMTS or Cable Modem Termination System for cable based or Hybrid Fibre Coax (HFC) based access networks, a DLC or Digital Loop Carrier, an Optical Fibre Aggregator for fibre based access networks like PONs or Passive Optical Networks, a node B or Radio Network Controller (RNC) for radio based systems or the airborne node in satellite based access systems, etc. The access network could be a point-to-point access network (as is the case for the different DSL flavours), or a point-to-multipoint access network (as is the case for cable or fibre based systems). It is further noticed that anywhere this patent application mentions "TV" or "video" or "IPTV", any type of video content is intended to be covered, irrespective of its origin, its nature (live content, scheduled on-demand content, ...) and its intended audience (e.g. nation-wide, community-restricted, etc.).

## Claims

1. An access node (101) able to multicast a plurality of video channels to subscribers, said access node (101) comprising channel selection means (151, 201) for selecting N video channels out of said plurality of video channels, and channel caching means (152, 202) for temporarily storing the most recent frames of said N video channels, N being an integer number equal to or larger than 1,
**CHARACTERIZED IN THAT** said channel selection means (151, 201) is adapted to select said N video channels on the basis of a weighted sum of the zapping rate rₖ and the channel popularity πₖ, determined for each video channel, and **in that** said channel selection means (151, 201) comprises:
a. means (213) to frequently measure said channel popularity πₖ for each video channel; and
b. means (214) to frequently measure for each video channel the average amount of time a channel is watched, Tₖ, corresponding to the time elapsed between an instant where a user zaps to said video channel and an instant where said user zaps from said video channel to another video channel; and
c. means (211) to memorize for each video channel an operator configurable weight factor for the zapping benefit, Bₖ; and
d. means (212) to memorize for each video channel an operator configurable weight factor for the channel quality gain, Gₖ; and **in that**
said operator configurable weight factor for the zapping benefit, Bₖ, is for each video channel set proportional to capacity savings in the network towards said access node (101); and **in that**
said operator configurable weight factor for the channel quality gain, Gₖ, is for each video channel set proportional to the importance of channel quality for said video channel.

2. An access node (101) according to claim 1,
**CHARACTERIZED IN THAT** said channel selection means (151, 201) further comprises:
e. means (215) to determine for each video channel said zapping rate rₖ by dividing said measured channel popularity, πₖ, with said measured average amount of time said video channel is watched, Tₖ.

3. An access node (101) according to claim 1 or claim 2,
**CHARACTERIZED IN THAT** said channel selection means (151, 201) further comprises:
f. means (215) to calculate for each video channel a channel advantage Aₖ according to the formula [Bₖ/Tₖ + Gₖ] x πₖ; and
g. channel ordering means (216) for ordering said video channels according to decreasing channel advantage Aₖ.

4. An access node (101) according to claim 3,
**CHARACTERIZED IN THAT** said caching means (202) are further adapted to cache the N first channels ordered according to decreasing channel advantage, Aₖ.

5. An access node (101) according to claim 1,
**CHARACTERIZED IN THAT** said access node (101) is a Digital Subscriber Line Access Multiplexer (DSLAM).

6. An access node (101) according to claim 1,
**CHARACTERIZED IN THAT** said access node is a Digital Loop Carrier (DLC).

7. An access node (101) according to claim 1,
**CHARACTERIZED IN THAT** said access node is a Cable Modem Termination System (CMTS).

8. An access node (101) according to claim 1,
**CHARACTERIZED IN THAT** said access node is an Optical Fibre Aggregator.

9. An access node (101) according to claim 1,
**CHARACTERIZED IN THAT** said access node is a node B.

10. An access node (101) according to claim 1,
**CHARACTERIZED IN THAT** said access node is a Radio Network Controller (RNC).

11. A method for caching video channels in an access node (101) able to multicast a plurality of video channels to subscribers, said method comprising selecting N video channels out of said plurality of video channels, and temporarily storing the most recent frames of said N video channels, N being an integer number equal to or larger than 1,
**CHARACTERIZED IN THAT** selecting said N video channels comprises determining for each video channel a weighted sum of the zapping rate rₖ and the channel popularity πₖ, and
selecting the first N video channels ordered according to decreasing value of said weighted sum; and
- frequently measuring (213) said channel popularity TTₖ for each video channel; and
- frequently measuring (214) for each video channel the average amount of time a channel is watched, Tₖ, corresponding to the time elapsed between an instant where a user zaps to said video channel and an instant where said user zaps from said video channel to another video channel; and memorizing for each video channel an operator configurable weight factor for the zapping benefit, Bₖ; and
- memorizing an operator configurable weight factor for the channel quality gain, Gₖ; and
- setting said operator configurable weight factor for the zapping benefit, Bₖ, for each video channel proportional to capacity savings in the network towards said access node (101); and
- setting said operator configurable weight factor for the channel quality gain, Gₖ, for each video channel proportional to the importance of channel quality for said video channel.

## Patentansprüche

1. Zugangsknoten (101), der fähig ist, eine Vielzahl von Videokanälen an Teilnehmer zu multicasten, wobei der besagte Zugangsknoten (101) Kanalauswahlmittel (151, 201) zum Auswählen von N Videokanälen aus der besagten Vielzahl von Videokanälen, sowie Kanal-Cache-Speichermittel (152, 202) zum temporären Speichern der zuletzt empfangenen Rahmen der besagten N Videokanäle umfasst, wobei N eine ganze Zahl gleich oder größer als 1 ist,
**DADURCH GEKENNZEICHNET, DASS** die besagten Kanalauswahlmittel (151, 201) dazu ausgelegt sind, N Videokanäle auf der Basis einer gewichteten Summe der Zapping-Rate rₖ und der für jeden Videokanal bestimmten Kanalpopularität TTₖ auszuwählen, und dass die besagten Kanalauswahlmittel (151, 201) umfassen:
a. Mittel (213) zum häufigen Messen der besagten Kanalpopularität TTₖ für jeden Videokanal; und
b. Mittel (214) zum häufigen Messen, für jeden Videokanal, der durchschnittlichen Zeitdauer, während welcher ein Kanal gesehen wird, wobei Tₖ der Zeit, welche zwischen einem Zeitpunkt, zu welchem ein Nutzer auf den besagten Videokanal zappt, und einem Zeitpunkt, zu welchem der besagte Nutzer von dem besagten Videokanal auf einen anderen Videokanal zappt, vergangen ist, entspricht; und
c. Mittel (211) zum Speichern, für jeden Videokanal, eines vom Betreiber konfigurierbaren Gewichtsfaktors für den Zapping-Nutzen, Bₖ; und
d. Mittel (212) zum Speichern, für jeden Videokanal, eines vom Betreiber konfigurierbaren Gewichtsfaktors für den Gewinn der Kanalqualität, Gₖ; und dass
der besagte vom Betreiber konfigurierbare Gewichtsfaktor für den Zapping-Nutzen, Bₖ, für jeden Videokanal proportional zu Kapazitätseinsparungen im Netzwerk bis zu dem besagten Zugangsknoten (101) gesetzt wird; und dass
der besagte vom Betreiber konfigurierbare Gewichtsfaktor für den Gewinn der Kanalqualität, Gₖ, für jeden Videokanal proportional zur Bedeutung der Kanalqualität für den besagten Videokanal gesetzt wird.

2. Zugangsknoten (101) nach Anspruch 1,
**DADURCH GEKENNZEICHNET, DASS** die besagten Kanalauswahlmittel (151, 201) weiterhin umfassen:
e. Mittel (215) zum Bestimmen, für jeden Videokanal, der besagten Zapping-Rate rₖ durch Dividieren der besagten gemessenen Kanalpopularität, TTₖ, durch die besagte gemessene durchschnittliche Zeitdauer, während welcher der besagte Videokanal gesehen wird, Tₖ.

3. Zugangsknoten (101) nach Anspruch 1 oder Anspruch 2,
**DADURCH GEKENNZEICHNET, DASS** die besagten Kanalauswahlmittel (151, 201) weiterhin umfassen:
f. Mittel (215) zum Berechnen, für jeden Videokanal, eines Kanalvorteils Aₖ gemäß der Formel [Bₖ/Tₖ + Gₖ] x TTₖ; und
g. Kanalordnungsmittel (216) zum Ordnen der besagten Videokanäle gemäß dem abnehmenden Kanalvorteil Aₖ.

4. Zugangsknoten (101) nach Anspruch 3,
**DADURCH GEKENNZEICHNET, DASS** die besagten Cache-Speichermittel (202) weiterhin dazu ausgelegt sind, N erste Kanäle, die gemäß dem abnehmenden Kanalvorteil, Aₖ, geordnet sind, zwischenzuspeichern.

5. Zugangsknoten (101) nach Anspruch 1,
**DADURCH GEKENNZEICHNET, DASS** der besagte Zugangsknoten (101) ein digitaler Teilnehmeranschluss-Zugangsmultiplexer (DSLAM) ist.

6. Zugangsknoten (101) nach Anspruch 1,
**DADURCH GEKENNZEICHNET, DASS** der besagte Zugangsknoten ein digitaler Schleifenträger (DLC) ist.

7. Zugangsknoten (101) nach Anspruch 1,
**DADURCH GEKENNZEICHNET, DASS** der besagte Zugangsknoten ein Kabelmodemendsystem (CMTS) ist.

8. Zugangsknoten (101) nach Anspruch 1,
**DADURCH GEKENNZEICHNET, DASS** der besagte Zugangsknoten ein faseroptischer Aggregator ist.

9. Zugangsknoten (101) nach Anspruch 1,
**DADURCH GEKENNZEICHNET, DASS** der besagte Zugangsknoten ein B-Knoten ist.

10. Zugangsknoten (101) nach Anspruch 1,
**DADURCH GEKENNZEICHNET, DASS** der besagte Zugangsknoten eine Funknetzwerk-Steuereinrichtung (RNC) ist.

11. Verfahren zum Zwischenspeichern von Videokanälen in einem Zugangsknoten (101), der fähig ist, eine Vielzahl von Videokanälen an Teilnehmer zu multicasten, wobei das besagte Verfahren das Auswählen von N Videokanälen aus der besagten Vielzahl von Videokanälen sowie das temporäre Speichern der zuletzt empfangenen Rahmen der besagten N Videokanäle umfasst, wobei N eine ganze Zahl gleich oder größer als 1 ist,
**DADURCH GEKENNZEICHNET, DASS** das Auswählen der besagten N Videokanäle
das Bestimmen, für jeden Videokanal, einer gewichteten Summe der Zapping-Rate rₖ und der Kanalpopularität TTₖ, und
das Auswählen der ersten N Videokanäle, die gemäß dem abnehmenden Wert der besagten gewichteten Summe geordnet sind,
umfasst; und
- häufiges Messen (213) der besagten Kanalpopularität TTₖ für jeden Videokanal; und
- häufiges Messen (214), für jeden Videokanal, der durchschnittlichen Zeitdauer, während welcher ein Kanal gesehen wird, wobei Tₖ der Zeit, welche zwischen einem Zeitpunkt, zu welchem ein Nutzer auf den besagten Videokanal zappt, und einem Zeitpunkt, zu welchem der besagte Nutzer von dem besagten Videokanal auf einen anderen Videokanal zappt, vergangen ist, entspricht; und Speichern, für jeden Videokanal, eines vom Betreiber konfigurierbaren Gewichtsfaktors für den Zapping-Nutzen, Bₖ; und
- Speichern eines vom Betreiber konfigurierbaren Gewichtsfaktors für den Gewinn der Kanalqualität, Gₖ; und
- Setzen des besagten vom Betreiber konfigurierbaren Gewichtsfaktors für den Zapping-Nutzen, Bₖ, für jeden Videokanal proportional zu Kapazitätseinsparungen im Netzwerk bis zu dem besagten Zugangsknoten (101); und
- Setzen des besagten vom Betreiber konfigurierbaren Gewichtsfaktors für den Gewinn der Kanalqualität, Gₖ, für jeden Videokanal proportional zur Bedeutung der Kanalqualität für den besagten Videokanal.

## Revendications

1. Noeud d'accès (101) pouvant multidiffuser une pluralité de canaux vidéo à des abonnés, ledit noeud d'accès (101) comprenant des moyens de sélection de canaux (151, 201) pour sélectionner N canaux vidéo parmi ladite pluralité de canaux vidéo, et des moyens de mise en antémémoire de canaux (152, 202) pour stocker temporairement les trames les plus récentes desdits N canaux vidéo, N étant un nombre entier supérieur ou égal à 1,
**CARACTÉRISÉ EN CE QUE** lesdits moyens de sélection de canaux (151, 201) sont adaptés pour sélectionner lesdits N canaux vidéo sur la base d'une somme pondérée de la vitesse de zapping rₖ et de la popularité des canaux TTₖ, déterminée pour chaque canal vidéo, et **en ce que** lesdits moyens de sélection de canaux (151, 201) comprennent :
a. moyens (213) pour mesurer fréquemment ladite popularité des canaux TTₖ pour chaque canal vidéo ; et
b. moyens (214) pour mesurer fréquemment pour chaque canal vidéo la durée moyenne de visionnage d'un canal, Tₖ, correspondant au temps écoulé entre un instant où un utilisateur zappe sur ledit canal vidéo et un instant où ledit utilisateur zappe dudit canal vidéo à un autre canal vidéo ; et
c. moyens (211) pour mémoriser pour chaque canal vidéo un facteur de pondération configurable par l'opérateur pour l'avantage du zapping, Bₖ ; et
d. moyens (212) pour mémoriser pour chaque canal vidéo un facteur de pondération configurable par l'opérateur pour le gain de qualité du canal, Gₖ, et **en ce que**
ledit facteur de pondération configurable par l'opérateur pour l'avantage du zapping, Bₖ, est pour chaque canal vidéo défini proportionnellement aux sauvegardes de capacité dans le réseau vers ledit noeud d'accès (101) ; et **en ce que** ledit facteur de pondération configurable par l'opérateur pour le gain de qualité du canal, Gₖ, est pour chaque canal vidéo défini proportionnellement à l'importance de la qualité du canal pour ledit canal vidéo.

2. Noeud d'accès (101) selon la revendication 1,
**CARACTÉRISÉ EN CE QUE** lesdits moyens de sélection de canaux (151 ; 201) comprennent en outre :
e. moyens (215) pour déterminer pour chaque canal vidéo ladite vitesse de zapping rₖ en divisant ladite popularité des canaux mesurée, TT_{K}, par ladite durée moyenne mesurée de visionnage dudit canal vidéo, Tₖ.

3. Noeud d'accès (101) selon la revendication 1 ou la revendication 2, **CARACTÉRISÉ EN CE QUE** lesdits moyens de sélection de canaux (151 ; 201) comprennent en outre :
f. moyens (215) pour calculer pour chaque canal vidéo un avantage de canaux Aₖ selon la formule [Bₖ/Tₖ + Gₖ] x TTₖ ; et
g. moyens de classement des canaux (216) pour classer lesdits canaux vidéo selon l'avantage de canaux décroissant Aₖ.

4. Noeud d'accès (101) selon la revendication 3,
**CARACTÉRISÉ EN CE QUE** lesdits moyens de mise en antémémoire (202) sont en outre adaptés pour mettre en antémémoire les N premiers canaux classés selon l'avantage de canaux décroissant, Aₖ.

5. Noeud d'accès (101) selon la revendication 1,
**CARACTÉRISÉ EN CE QUE** ledit noeud d'accès (101) est un multiplexeur d'accès de ligne d'abonné numérique (DSLAM).

6. Noeud d'accès (101) selon la revendication 1,
**CARACTÉRISÉ EN CE QUE** ledit noeud d'accès est une porteuse à boucle numérique (DLC).

7. Noeud d'accès (101) selon la revendication 1,
**CARACTÉRISÉ EN CE QUE** ledit noeud d'accès est un système de terminaison de modem-câble (CMTS).

8. Noeud d'accès (101) selon la revendication 1,
**CARACTÉRISÉ EN CE QUE** ledit noeud d'accès est un agrégateur de fibre optique.

9. Noeud d'accès (101) selon la revendication 1,
**CARACTÉRISÉ EN CE QUE** ledit noeud d'accès est un noeud B.

10. Noeud d'accès (101) selon la revendication 1,
**CARACTÉRISÉ EN CE QUE** ledit noeud d'accès est un contrôleur de réseau radio (RNC).

11. Procédé pour mettre en antémémoire des canaux vidéo dans un noeud d'accès (101) pouvant multidiffuser une pluralité de canaux vidéo à des abonnés, ledit procédé comprenant la sélection de N canaux vidéo parmi ladite pluralité de canaux vidéo, et le stockage temporaire des trames les plus récentes desdits N canaux vidéo, N étant un nombre entier supérieur ou égal à 1,
**CARACTÉRISÉ EN CE QUE** la sélection desdits N canaux vidéo comprend la détermination pour chaque canal vidéo d'une somme pondérée de la vitesse de zapping rₖ et de la popularité des canaux TTₖ, et
la sélection des N premiers canaux vidéo classés en fonction de la valeur décroissante de ladite somme pondérée ; et
- la mesure fréquente (213) de ladite popularité des canaux TTₖ pour chaque canal vidéo ; et
- la mesure fréquente (214) pour chaque canal vidéo de la durée moyenne de visionnage d'un canal, Tₖ, correspondant au temps écoulé entre un instant où un utilisateur zappe sur ledit canal vidéo et un instant où ledit utilisateur zappe dudit canal vidéo à un autre canal vidéo, et la mémorisation pour chaque canal vidéo d'un facteur de pondération configurable par l'opérateur pour l'avantage du zapping, Bₖ ; et
- la mémorisation d'un facteur de pondération configurable par l'opérateur pour le gain de qualité du canal, Gₖ ; et
- la définition dudit facteur de pondération configurable par l'opérateur pour l'avantage du zapping, Bₖ, pour chaque canal vidéo proportionnel aux sauvegardes de capacité dans le réseau vers ledit noeud d'accès (101) ; et
- la définition dudit facteur de pondération configurable par l'opérateur pour le gain de qualité du canal, Gₖ, pour chaque canal vidéo proportionnel à l'importance de la qualité du canal pour ledit canal vidéo.
